# EUROPEAN PATENT APPLICATION

(11) **EP 1 150 234 A1**
(43) Date of publication of application: **31.10.2001**
(21) Application number: 01300439.5
(22) Date of filing: 18.01.2001
(51) Int. Cl.: G06F 17/60

(54) **Sales promotion controlling system based on direct mail, server thereof, method thereof, and computer readable record medium thereof**

(30) Priority: 28.04.2000 JP 2000129207
(71) Applicant: FUJITSU LIMITED, Kawasaki-shi, Kanagawa 211-8588 (JP)
(72) Inventor: Ho, Denny, Fujitsu Limited, Kawasaki-shi, Kanagawa 211-8588 (JP)
(74) Representative: Mohun, Stephen John

(57) **Abstract**

After an FSP server device (104) causes a DM mail server device (105) to issue direct mail (DM), the FSP server device (104) determines whether or not the DM was browsed. Based on the determined result, the FSP server device (104) controls an assignment of a benefit (discounted price and sales promotion point) to purchase activities of commodities by customers who are DM recipients on the POS system. Thus, the FSP server device (104) can accurately determine whether each customer opened the direct mail. Based on the determined result, the FSP server device (104) can offer a special benefit to a customer and thereby fulfill the effects of the sales promotion.

## Description

The present invention relates to a sales promotion technology using direct mail in a POS (Point Of Sales) system, an online shopping system, or the like

In a known POS system and a known online shopping system, direct mail (hereinafter referred to as DM) is issued to prospective customers so as to inform them of bargain information and event information and perform sales promotion.

In recent years, as Internet technologies and electronic mail using these technologies are rapidly becoming common, mediums of DM are being changed from paper (such as postcards and sealed letters) to electronic mail.

However, in a known DM method, it is difficult to determine whether or not a customer who visited a store had read the DM. Thus, it is difficult to accurately analyze the effect of the DM.

As a result, in the prior art, it is necessary to assign especially large amount of money to DM.

Embodiments of the present invention aim to achieve a sufficient effect of sales promotion in such a manner that it is determined whether or not a customer opened the DM, that a special benefit is offered to only a customer who opened the DM, and that it is determined that only when a customer had opened the DM and purchased commodities advertised therein in a designated period, the DM was collected.

The invention is defined in the attached independent claims, to which reference should now be made. Further, preferred features may be found in the sub-claims appended thereto.

Embodiments of the present invention may provide a sales promotion controlling system based on direct mail issued using online communicating means corresponding to an Internet technology.

A browsing determining device (DM open information managing unit) determines whether or not issued direct mail was browsed.

A sales promotion controlling device (customer master managing unit, offer information managing unit, transaction information managing unit) controls sales promotion activities for commodities advertised by the direct mail corresponding to the determined result.

The sales promotion controlling device is a server device (FSP server device, POS server device) for use with a point-of-sales (POS) information managing system or an online shopping system and controls an assignment state of a benefit to a commodity purchasing activity by a recipient of the direct mail on the POS information managing system or the online shopping system.

The sales promotion controlling device is a server device for use with a point-of-sales (POS) information managing system or an online shopping system and analyzes an effect of the issuance of the direct mail corresponding to whether browsing was detected by the browsing determining device and a transaction history of commodities on the POS information managing system or the online shopping system.

The sales promotion controlling device controls the issuance state of the direct mail corresponding to the determined result of the browsing determining device.

The direct mail is issued as electronic mail with a direct mail open acknowledge message request option. The browsing determining device determines whether or not the issued direct mail was browsed corresponding to the direct mail open acknowledge message returned from the recipient of the electronic mail.

The direct mail is issued using a sales promotion homepage. The browsing determining device determines whether or not the issued direct mail was browsed from a returned result of a form provided on the sales promotion homepage returned by a customer who browsed the sales promotion homepage.

Embodiments of the present invention may provide a server that stores the transmission and reception states of direct mail, commodity information, and customer information to a storing means or as a processing means for performing a process for providing a service corresponding to a content stored in a storing means.

In addition, the present invention may provide a method for providing the same function as that provided by the above-described system.

Moreover, the present invention may provide a computer readable record medium that causes a computer to perform the same function as that accomplished by the structure of the above-described system.

A preferred embodiment of the present invention will now be described, by way of example only, with reference to the accompanying drawings in which like elements are denoted by a like reference numeral and in which:
Fig. 1 is a schematic diagram showing the overall structure of a system according to an embodiment of the present invention;
Fig. 2 is a schematic diagram for explaining the theory of operation of the embodiment of the present invention;
Fig. 3 is a schematic diagram showing functions of an FSP server device and a POS server device;
Fig. 4 is a schematic diagram showing the structure of a user interface of the FSP server device;
Fig. 5 is a flow chart showing the operation of a POS sales registering process;
Fig. 6A is a schematic diagram showing discrimination of customers;
Fig. 6B is a schematic diagram showing the relation between a DM browsed customer counting system (present invention) and a non-counting system;
Fig. 7 is a block diagram showing the structure of an information processing unit; and
Fig. 8 is a schematic diagram for explaining a computer readable record medium and a transfer signal that allow programs and data to be supplied to the information processing unit.

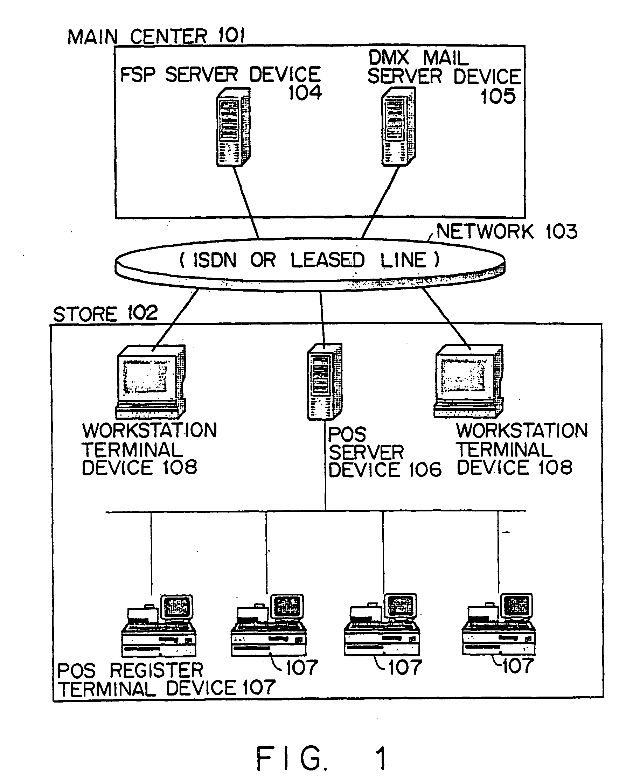

Fig. 1 is a schematic diagram showing the structure of a system according to the embodiment of the present invention.

The embodiment of the present invention comprises a POS system connected through a network 103 composed of an ISDN (Integrated Services Digital Network) line, a leased line, or the like. The POS system is composed of a main center 101 and a plurality of stores 102.

In the main center 101, an FSP server device 104 and a DM mail server device 105 are disposed.

The FSP server device 104 is a server computer that controls all sales promotion activities on the POS system.

The DM mail server device 105 is a server computer that controls the transmission and reception of electronic DM to and from customers corresponding to commands issued from the FSP server device 104.

In each store 102, a POS server device 106, a POS register terminal device 107, and a workstation terminal device 108 are disposed.

The POS server device 106 is a server computer that controls point-of-sales information at the store 102 while communicating with the FSP server device 104 of the main center 101 through the network 103.

The POS register terminal device 107 has a cash register. The POS register terminal device 107 is a terminal unit that, for example, inputs commodity sales and outputs receipts while communicating with the POS server device 106.

The workstation terminal device 108 is a terminal unit that, for example, inquires about point-of-sales information, such as a sales summary, while communicating with the FSP server device 104 of the main center 101 through the network 103.

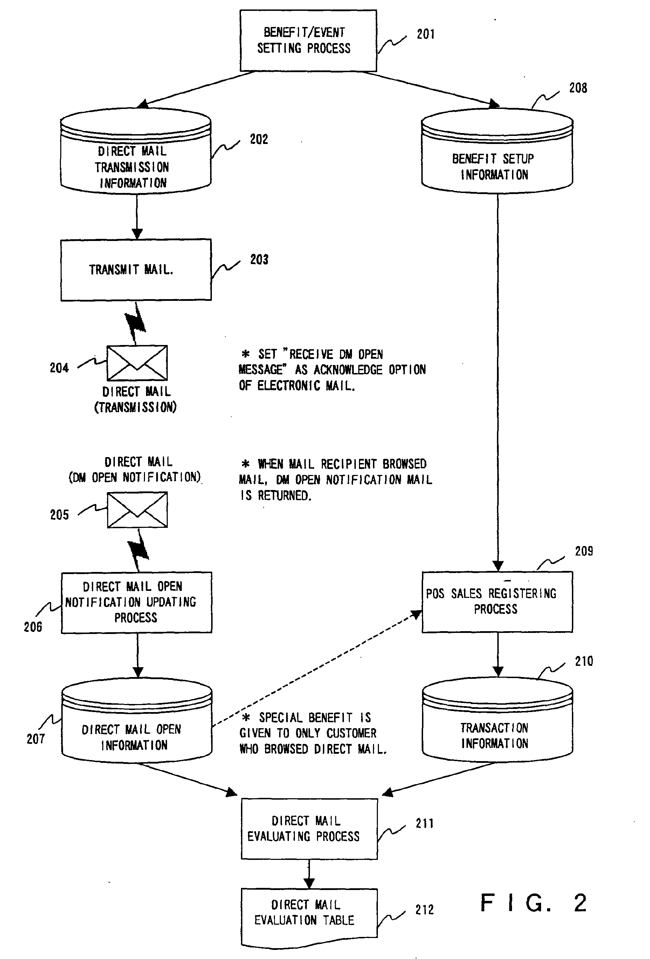

Fig. 2 is a schematic diagram for explaining the theory of operation of the embodiment of the present invention.

The FSP server device 104 shown in Fig. 1 has a function for setting a benefit and an event for sales promotion of commodities (at step 201 shown in Fig. 2).

The FSP server device 104 has a function for setting DM transmission information to each registered customer (at step 202 shown in Fig. 2).

The FSP server device 104 causes the DM mail server device 105 (see Fig. 1) to transmit DM as electronic mail corresponding to the transmission information (at step 203 shown in Fig. 2).

Thus, the DM mail server device 105 transmits the DM as electronic mail to each registered customer (at step 204 shown in Fig. 2). At the point, a DM open acknowledge message request option is added to the DM that is transmitted.

As a result, when each customer opens the DM, the mail server device on the receiving side notifies the DM mail server device 105 of a DM open acknowledge message as electronic mail that indicates that the relevant customer opened the DM (at step 205 shown in Fig. 2).

When the DM mail server device 105 receives the message, the DM mail server device 105 notifies the FSP server device 104 of the reception of the DM open acknowledge message. As a result, the FSP server device 104 executes a DM open notification updating process (at step 206 shown in Fig. 2) and stores DM open information for each customer from whom the FSP server device 104 received the DM open acknowledge message (at step 207 shown in Fig. 2).

In such a manner, whenever the FSP server device 104 of the main center 101 issues DM, the FSP server device 104 can know whether or not each customer browsed the DM. Thus, sales promotion activities for commodities advertised in the DM can be finely executed.

In reality, the FSP server device 104 sets a special benefit to only customers who browsed the DM so as to perform sales promotion for commodities at each store (at step 208 shown in Fig. 2).

When commodity sales take place in the POS register terminal device 107 of the store 102 (see Fig. 1) and the POS server device 106 executes a POS sales registering process, the POS register terminal device 107 references the DM open information stored in the FSP server device 104 through the POS server device 106 and the network 103 (see Fig. 1) with a key of a customer number that is input from the POS register terminal device 107 (at step 209 shown in Fig. 2). At the point, when the customer corresponding to the input customer number browsed the DM, the POS register terminal device 107 further references benefit setup information stored in the FSP server device 104 (at step 208 shown in Fig. 2). As a result, the POS register terminal device 107 performs a special discount or gives a special sales promotion point to the customer. In such a manner, the DM can effectively motivate customers to visit the store.

The FSP server device 104 executes a DM evaluating process (at step 211 shown in Fig. 2) based on transaction information (at step 210 shown in Fig. 2) stored in the POS sales registering process, performed by the POS server device 106, and the DM open information (at step 207 shown in Fig. 2) and calculates a DM evaluation table (at step 212 shown in Fig. 2). As a result, the FSP server device 104 can accurately analyze the effect of the DM. In other words, the FSP server device 104 can perform a DM issuing process that maximizes the effect and minimizes the cost.

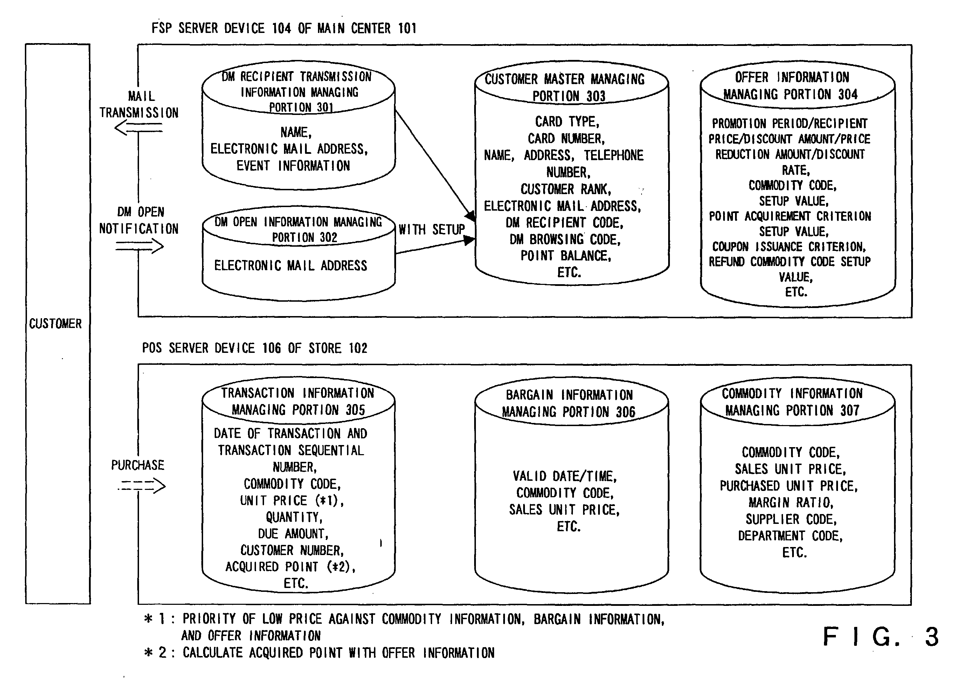

Fig. 3 is a schematic diagram showing functions of the FSP server device 104 in the main center 101 and the POS server device 106 in the store 102 of the system shown in Fig. 1 according to the present invention.

The FSP server device 104 comprises a DM recipient transmission information managing unit 301, a DM open information managing unit 302, a customer master managing unit 303, and an offer information managing unit 304.

The DM recipient transmission information managing unit 301 manages, for example, the registration, reference, update and deletion of DM recipient transmission information which is transmission information of DM for each DM recipient ,and DM transmission indication, etc (at step 202 shown in Fig. 2). The DM recipient transmission information of each DM recipient is composed of a name and an electronic mail address referenced from a customer master managed by the customer master managing unit 303 and event information that is a content of the DM. The DM recipient transmission information managing unit 301 causes the DM mail server device 105 to transmit the DM as electronic mail based on the DM recipient transmission information (at step 203 shown in Fig. 2).

The DM open information managing unit 302 executes the above-described DM open notification updating process based on the reception notification of the DM open acknowledge message received from the DM mail server device 105 (at step 206 shown in Fig. 2) and stores the electronic mail address of the customer contained in the DM open acknowledge message as the DM open information (at step 207 shown in Fig. 2) for each customer from whom the DM open acknowledge message was received. The DM open information managing unit 302 sends DM open information corresponding to an inquiry from the POS server device 106 (see Fig. 1) of the store 102.

The customer master managing unit 303 manages, for example, the registration, reference, update, and deletion of the customer master as a customer information database. The customer master contains card information (a card type for example credit card, point card, store card, or the like) and a card number, customer personal information (a name, an address, and a telephone number), a customer rank (a rank of each customer categorized corresponding to a predetermined criterion), an electronic mail address, a DM recipient code (representing whether or not each customer is a DM recipient), a DM browsing code (representing whether or not each customer browsed DM corresponding to DM open information), a point balance (a sales promotion point given whenever each customer purchased one or more commodities), and so forth for each customer. The customer master is used for a customer purchased commodity analyzing process, a sales promotion point managing process, a DM/news transmitting process, and so forth.

The offer information managing unit 304 manages the registration, reference, update, and deletion of offer information as benefit and event information for sales promotion for commodities for each customer ranks. In addition, the offer information managing unit 304 sends relevant offer information corresponding to an inquiry from the POS server device 106 (see Fig. 1) of the store 102 (at step 209 shown in Fig. 2). The offer information contains a promotion period, recipients (customer rank), a price, a reduction rate, a discount rate, a commodity code setup value, a sales promotion point acquirement criterion setup value, a coupon issuance criterion, a benefit refund commodity code setup value, and so forth.

The POS server device 106 (see Fig. 1) in the store 102 comprises a transaction information managing unit 305, a bargain information managing unit 306, and a commodity information managing unit 307.

The transaction information managing unit 305 executes a POS sales registering process for managing and storing transaction information generated by the POS register terminal device 107 of the store 102 (see Fig. 1) based on the sales of commodities (at step 209 shown in Fig. 2). The transaction information contains a date of transaction, a transaction sequence number, a commodity code, a unit price, a quantity, a due amount, an amount of payment, a customer number, an acquired point, and so forth. When the transaction information managing unit 305 executes the above-described POS sales registering process, the transaction information managing unit 305 inquires the DM open information managing unit 302 of the FSP server device 104 about whether or not the customer browsed the DM with a key of the customer number that is input from the POS register terminal device 107. In addition, the transaction information managing unit 305 inquires the customer master managing unit 303 and the offer information managing unit 304 in the FSP server device 104 about whether or not the customer is a DM recipient and about offer information such as unit price and point acquirement criterion with keys of the customer number and the commodity code that are input from the POS register terminal device 107. Moreover, the transaction information managing unit 305 references bargain information stored in the bargain information managing unit 306 and decides the unit price and acquired point of the transaction information that is stored. In addition, the transaction information managing unit 305 causes the POS register terminal device 107 to output a receipt.

The bargain information managing unit 306 manages, for example, the registration, reference, update, and deletion of valid date/time of bargain commodities, a commodity code, a unit price, and so forth as bargain information.

The commodity information managing unit 307 manages, for example, a commodity code, a sales unit price, a purchased unit price, a margin ratio, a supplier code, a department code, and so forth as commodity information necessary for POS management.

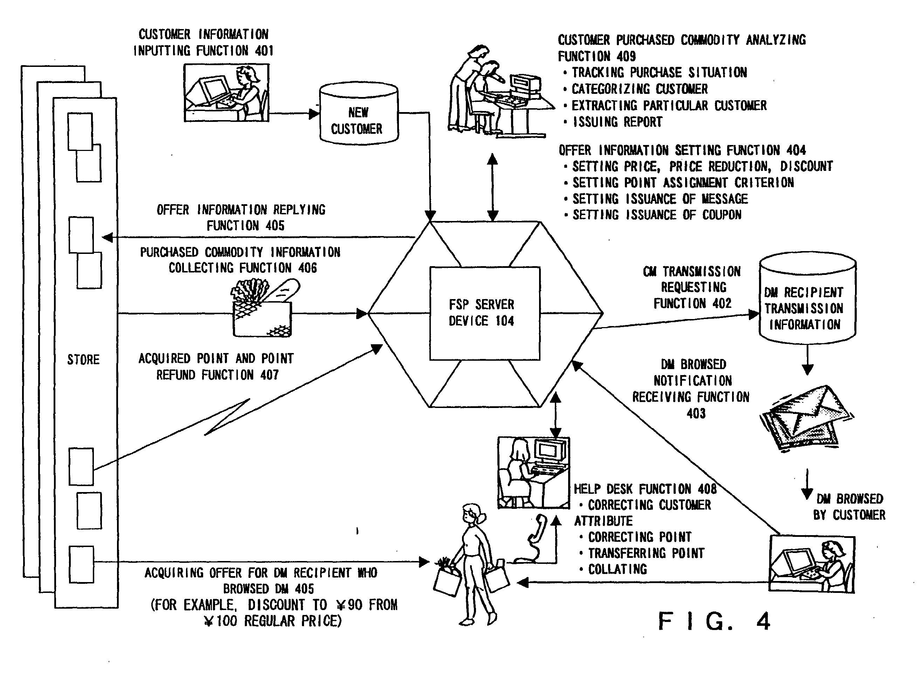

Fig. 4 is a schematic diagram showing the structure of a user interface of the FSP server device 104 in the main center 101.

A customer information inputting function 401 is a function for registering customer information of a new customer to the customer master managed by the customer master managing unit 303 shown in Fig. 3. The customer information inputting function 401 allows a terminal unit (not shown) in the main center 101 to access the FSP server device 104.

A DM transmission requesting function 402 is accomplished as a function of the DM recipient transmission information managing unit 301 shown in Fig. 3. The DM transmission requesting function 402 is a function for causing the DM mail server device 105 to transmit DM as electronic mail.

A DM browsed notification receiving function 403 is accomplished as a function of the DM open information managing unit 302 shown in Fig. 3. The DM browsed notification receiving function 403 is a function for storing an electronic mail address of a customer contained in the DM open acknowledge message received from the DM mail server device 105.

An offer information setting function 404 is accomplished as a function of the offer information managing unit 304 shown in Fig. 3. The offer information setting function 404 is a function for setting offer information as benefit and event information for sales promotion of commodities corresponding to customer ranks.

An offer information replying function 405 is accomplished as a function of the offer information managing unit 304 shown in Fig. 3. The offer information replying function 405 is a function for sending relevant offer information to an inquiry from the POS server device 106 (see Fig. 1) of the store 102.

A purchased commodity information collecting function 406 is a function for collecting transaction information managed by the transaction information managing unit 305 from the POS server device 106 of the store 102.

An acquired point and point refund function 407 is a function for collecting an acquired point contained in the transaction information managed by the transaction information managing unit 305 from the POS server device 106 of the store 102 and reflecting the acquired point to the point balance contained in the customer master managed by the customer master managing unit 303 shown in Fig. 3.

A help desk function 408 is a function for correcting relevant customer information of the customer master managed by the customer master managing unit 303 shown in Fig. 3, correcting point information, transferring current point information to other point information, and collating customer information corresponding to a request from a customer.

A customer purchased commodity analyzing function 409 is a function for executing a customer purchased commodity analyzing process based on information collected by the purchased commodity information collecting function 406 and customer information of the customer master managed by the customer master managing unit 303. In reality, the customer purchased commodity analyzing function 409 is a function for tracking a purchase situation, summing customer categories, extracting customer information about a particular customer, and issuing various summary reports.

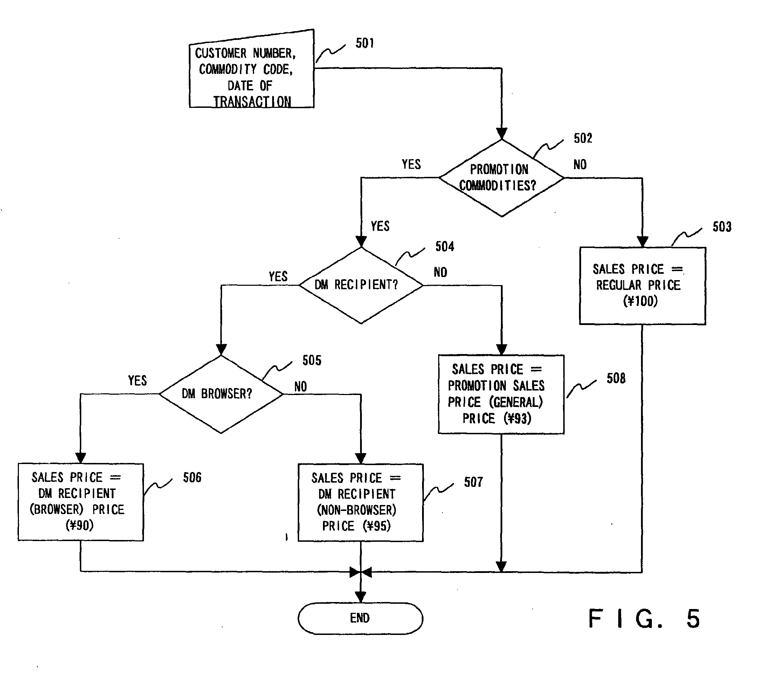

Fig. 5 is a flow chart showing the POS sales registering process executed by the transaction information managing unit 305 of the POS server device 106 upon an occurrence of commodity sales in the POS register terminal device 107 of the store 102 (see Fig. 1) corresponding to the present invention.

First of all, the POS server device 106 obtains a customer number, a commodity code, and a transaction date from the POS register terminal device 107 (at step 501 shown in Fig. 5).

Thereafter, the POS server device 106 references bargain information stored in the transaction information managing unit 305 with a key of the obtained commodity code and determines whether or not commodities corresponding to the commodity code are promotion (bargain) commodities (at step 502 shown in Fig. 5).

When the POS server device 106 has determined that the commodities corresponding to the obtained commodity code are not the promotion commodities (namely, the determined result at step 502 shown in Fig. 5 is No), the POS server device 106 sets the sales price to the regular price, stores it as transaction information, and causes the POS register terminal device 107 to output a receipt (at step 503 shown in Fig. 5).

On the other hand, if the POS server device 106 determines that the commodities corresponding to the obtained commodity code are promotion commodities (namely, the determined result at step 502 shown in Fig. 5 is Yes), the POS server device 106 inquires the customer master managing unit 303 of the FSP server device 104 with a key of the obtained customer number and determines whether the customer corresponding to the customer number is a DM recipient (at step 504 shown in Fig. 5).

When the POS server device 106 has determined that the customer corresponding to the customer code is not a DM recipient (namely, the determined result at step 504 is No), the POS server device 106 sets the sales price to the regular promotion sales price, stores it as transaction information, and causes the POS register terminal device 107 to output a receipt (at step 508 shown in Fig. 5).

When the POS server device 106 has determined that the customer corresponding to the customer number is a DM recipient (namely, the determined result at step 504 is Yes), the POS server device 106 inquires the DM open information managing unit 302 of the FSP server device 104 with a key of the obtained customer number and determines whether or not the customer corresponding to the customer number is a DM recipient who browsed the DM (hereinafter referred to as DM browser) (at step 505 shown in Fig. 5).

When the POS server device 106 has determined that the customer corresponding to the customer number is not a DM browser (namely, the determined result at step S505 is No), the POS server device 106 sets the sales price to a DM recipient non-browser price, stores it as transaction information, and causes the POS register terminal device 107 to output a receipt (at step 507 shown in Fig. 5).

When the POS server device 106 has determined that the customer corresponding to the customer number is a DM browser (namely, the determined result at step 505 is Yes), the POS server device 106 sets the sales price to a DM recipient browser price, stores it as transaction information, and causes the POS register terminal device 107 to output a receipt (at step 507 shown in Fig. 5).

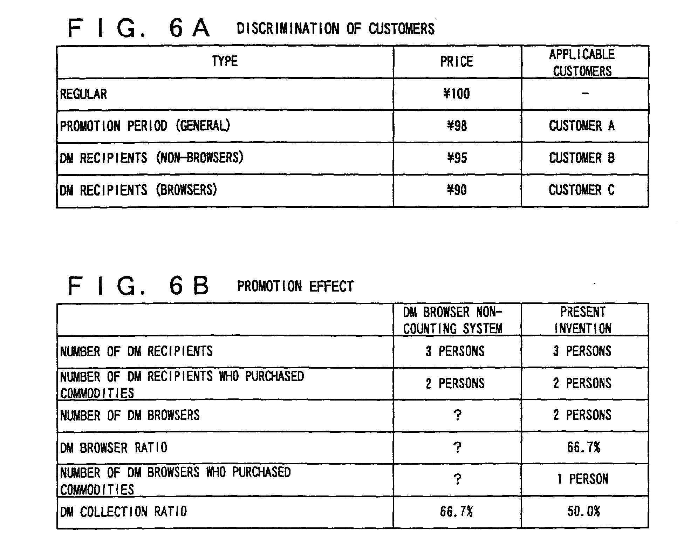

Next, with reference to Figs. 6A and 6B, an operation of the embodiment of the present invention will be described. Fig. 6A shows an example of discrimination of customers. Fig. 6B shows the relation between a DM browsed customer (browser) counting system (present invention) and a non-counting system.

Now, it is assumed that there are four customers A, B, C, and D.
- Customer A: Non DM recipient, with purchase in promotion period
- Customer B: DM recipient (non-browser), with purchase in promotion period
- Customer C: DM recipient (browser), with purchase in promotion period
- Customer D: DM recipient, without purchase in promotion period

In that case, as shown in Fig. 6A, it is assumed that the customers are discriminated in such a manner that the regular price in a non promotion period = ¥ 100; the non DM recipient price in a promotion period = ¥ 98 (customer A); the DM recipient, non-browser price = ¥ 95 (customer B); and the DM recipient, browser price = ¥ 90 (customer C).

Fig. 6B shows the relation between the DM browsed customer (browser) counting system and the non-counting system. As shown in Fig. 6B, according to the embodiment of the present invention, information of the number of DM browsers, DM browser ratio (number of DM browsers / number of DM recipients), and number of browsers who purchased commodities can be obtained unlike with the non-counting system. In the non-counting system, the DM collection ratio is calculated as (number of DM recipients who purchased commodities / number of DM recipients). However, according to the present invention, the DM collection ratio can be calculated as (number of browsers who have browsed DM and purchased commodities / number of DM browsers).

As descried above, according to the embodiment of the present invention, the effect of DM can be accurately analyzed. Thus, the DM issuing process that minimizes the necessary cost and maximizes the effect can be performed.

According to the embodiment of the present invention, as shown in Fig. 1, the main center 101 and the plurality of stores 102 are connected as a POS system through the network 103 composed of an ISDN line or a leased line. However, it should be noted that the present invention is not limited to such an example. In other words, the POS server device 106 shown in Fig. 1 can be substituted with a WWW (World Wide Web) server device. The FSP server device 104 and the WWW server device can be connected by a LAN (Local Area Network) or a leased line. The WWW server device can provide an online shopping mall to customers through the Internet. In that case, when the WWW server device receives an order, the WWW server device inquires the FSP server device about DM transmission and DM browsing states and so forth. The WWW server device can decide commodity prices (or discount prices) or give sales promotion points corresponding to the DM transmission and DM browsing states.

In the above-described embodiment, DM is transmitted as electronic mail with a DM open acknowledge message request option. According to the DM open acknowledge message sent back from the recipient of the DM, it is determined whether the recipient browsed the DM. However, it should be noted that the present invention is not limited to such an example. In the case that DM is issued using a sales promotion homepage and that it is determined whether or not a customer browsed DM corresponding to a returned result of a form provided on the sales promotion homepage, the present invention can be applied.

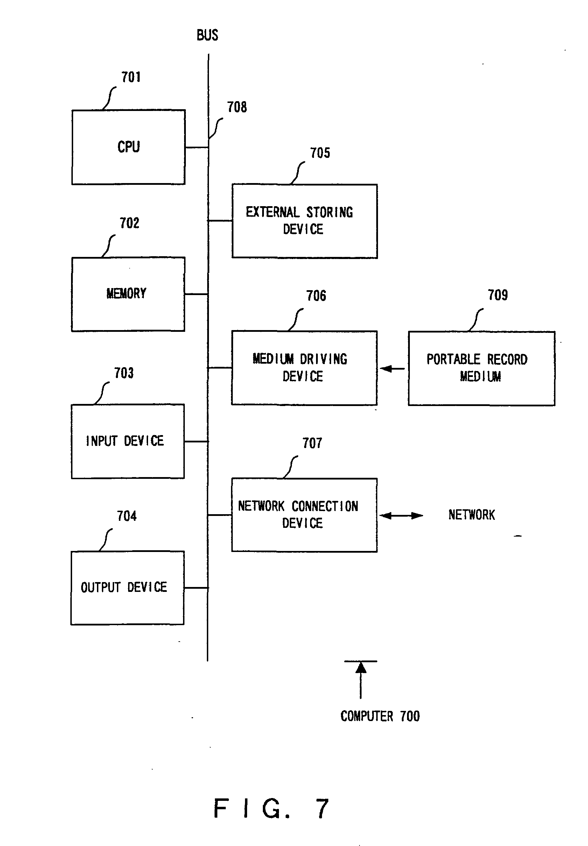

Each of the above-described servers and terminal units can be accomplished by an information processing unit (computer) shown in Fig. 7. An information processing device 700 shown in Fig. 7 comprises a CPU 701, a memory 702, an input device 703, an output device 704, an external storing device 705, a medium driving device 706, and a network connecting device 707. These devices are connected by a bus 708.

The memory 702 includes, for example, a ROM (Read Only Memory) and a RAM (Random Access Memory). The memory 702 stores programs and data. The CPU 701 executes a program using the memory 702 so as to perform a required process.

Each device and each unit that compose each server and each terminal are stored as a program to a particular program code segment of the memory 702. The input device 703 includes, for example, a keyboard, a pointing device, and a touch panel. The input device 703 is used to input commands and data of the user. The output device 704 includes, for example, a display device and a printer. The output device 704 is used to prompt the user of the information processing device 700 for data and to output processed results.

The external storing device 705 includes, for example, a magnetic disc device, an optical disc device, and a magneto-optical disc. The external storing device 705 pre-stores the above-described programs and data. When necessary, the programs and data are loaded to the memory 702.

The medium driving device 706 drives a portable record medium 709 and accesses a record content thereof. The record medium 709 includes, for example, a memory card, a memory stick, a floppy disk, a CD-ROM (Compact Disc Read Only Memory), an optical disc, a magneto-optical disc, a DVD (Digital Versatile Disc) from which any computer can read programs and/or data. The above-described programs and data are pre-stored to the portable record medium 709. When necessary, the programs and data can be loaded to the memory 702.

The network connecting device 707 communicates with an external device through any network (line) such as LAN or WAN and converts data corresponding to an appropriate communication protocol. When necessary, the network connecting device 707 receives the above-described programs and data from an external device and loads them to the memory 702.

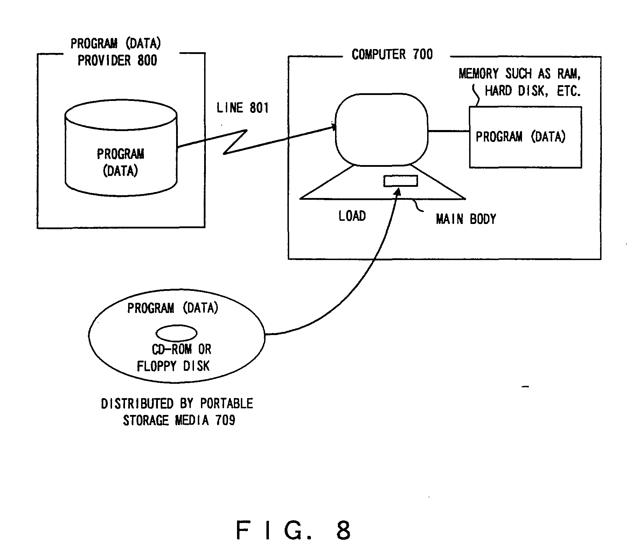

Fig. 8 shows a computer readable record medium and a transfer signal that allow programs and data to be supplied to the information processing device 700 shown in Fig. 7.

Alternatively, the present invention can be accomplished as a computer readable record medium 709 that allows a computer to perform the same functions as those accomplished by the individual structural units of the embodiment of the present invention.

A program that causes a computer to perform the same processes as those performed by the individual devices of the embodiment may be pre-stored to the computer readable record medium 709. As shown in Fig. 8, the program is read from the record medium 709 to the computer 700 (for example, the FSP server device 104 or the POS server device 106) and temporarily stored to the memory 702 or the external storing device 705 of the computer 700. The stored program is read and executed by the CPU 701 of the computer 700.

A transfer signal of a program transferred through a line 801 (transmission medium) from a program (data) provider 800 to the computer 700 allows a general-purpose computer to perform the same functions as the individual devices of the embodiment of the present invention.

According to the present invention, it can be securely determined whether or not a customer opened direct mail.

Thus, a special benefit can be given to only a customer who opened direct mail.

In addition, only for a customer who purchased commodities in a designated period and opened direct mail, it can be determined that direct main transmitted thereto was collected.

Thus, according to the present invention, sufficient effects of sales promotion can be accomplished. As a result, sales promotion activities can be delicately performed for commodities advertised by direct mail.

More practically, direct mail effectively motivates a customer to visit a shop.

In addition, according to the present invention, since direct mail is evaluated corresponding to transaction information (of POS sales and online shopping sales) and direct mail open acknowledge information, the direct mail is evaluated. Thus, the effects of the direct mail can be accurately analyzed. Thus, a direct mail issuing process that minimizes the required cost and maximizes the effects can be performed.

While the invention has been described with reference to the preferred embodiments thereof, various modifications and changes may be made to those skilled in the art without departing from the scope of the invention as defined by the claims thereof.

## Claims

1. A sales promotion controlling system based on direct mail issued using online communicating means corresponding to an Internet technology, comprising:
a browsing determining device (302) for determining whether or not issued direct mail was browsed; and
a sales promotion controlling device (303, 304, 305) for controlling sales promotion activities for commodities advertised by the direct mail corresponding to the determined result of said browsing determining device (302).

2. The system as set forth in claim 1,
wherein said sales promotion controlling device (303, 304, 305) is a server device (104, 106) for use with a point-of-sales (POS) information managing system or an online shopping system and controls an assignment state of a benefit to a commodity purchasing activity by a recipient of the direct mail on the POS information managing system or the online shopping system based on the determined result of said browsing determining device (302).

3. The system as set forth in claim 1 or 2,
wherein said sales promotion controlling device (303, 304, 305) is a server device (104, 106) for use with a point-of-sales (POS) information managing system or an online shopping system and analyzes an effect of the issuance of the direct mail based on the determined result of said browsing determining device (302) and a transaction history of commodities on the POS information managing system or the online shopping system.

4. The system as set forth in any preceding claim,
wherein said sales promotion controlling device (303, 304, 305) controls the issuance state of the direct mail based on the determined result of said browsing determining device (302).

5. The system as set forth in any preceding claim,
wherein the direct mail is issued as electronic mail with a direct mail open acknowledge message request option, and
wherein said browsing determining device (302) determines whether or not the issued direct mail was browsed based on the direct mail open acknowledge message returned from a recipient of the electronic mail.

6. The system as set forth in any of claims 1 to 4,
wherein the direct mail is issued using a sales promotion homepage, and
wherein said browsing determining device (302) determines whether or not the issued direct mail was browsed based on a returned result of a form provided on the sales promotion homepage returned by a customer who browsed the sales promotion homepage.

7. A server (104) for controlling direct mail issued using online communicating means based on an Internet technology, comprising:
first storing means (301) for storing a customer to whom direct mail describing sales promotion information was transmitted;
second storing means (302) for storing information representing whether or not the customer to whom direct mail was transmitted browsed the direct mail; and
third storing means (304) for storing information about commodities,
wherein said third storing means (304) stores sales promotion information of direct mail in correspondence with commodities.

8. A server (104) for controlling direct mail issued using online communicating means based on an Internet technology, comprising:
first storing means (301) for storing information about a customer to whom direct mail describing sales promotion information was transmitted; and
second storing means (303) for storing information about each customer,
wherein said second storing means (303) stores information representing whether or not each customer browsed the direct mail in correspondence with each customer.

9. A processing apparatus (106) for processing a service corresponding to direct mail issued using online communicating means based on an Internet technology, comprising:
first storing means (301) for storing information about a customer to whom direct mail describing sales promotion information was transmitted;
second storing means (302) for storing information representing whether or not the customer to whom direct mail was transmitted browsed the direct mail;
identifying means (107) for identifying the customer who uses the service;
determining means (305) for determining whether or not the direct mail was transmitted to the customer with reference to said first storing means (301) and determining whether or not the customer browsed the direct mail with reference to said second storing means (302) when the customer is identified by said identifying means (107); and
processing means (305) for providing different services depending on whether: the direct mail was not transmitted to the customer; the customer received, but did not browse the direct mail; or the customer browsed the direct mail corresponding to the determined result of said determining means (305).

10. A processing apparatus (106) for processing a service corresponding to direct mail issued using online communicating means based on an Internet technology, comprising:
first storing means (301) for storing information about direct mail transmitted to a customer;
second storing means (306) for storing information representing sales promotion in correspondence with commodity information; and
settling means for settling a transaction performed with the customer,
wherein said settling means references said first storing means (301), determines the transmission state of the direct mail to the customer, references said second storing means (306), determines whether or not the customer purchased commodities with respect to the sales promotion, and provides a service to the customer based on the determined result.

11. A sales promotion controlling method based on direct mail issued using online communicating means based on an Internet technology, comprising the steps of:
determining whether or not issued direct mail was browsed (505); and
controlling sales promotion activities for commodities advertised by the direct mail based on the determined result (506, 507).

12. A sales promotion controlling method based on direct mail issued using online communicating means based on an Internet technology, comprising the steps of:
determining whether or not issued direct mail was browsed (505); and
controlling an assignment state of a benefit to a commodity purchasing activity by a recipient of the direct mail on a POS information managing system or an online shopping system corresponding to the determined result.

13. A sales promotion controlling method based on direct mail issued using online communicating means based on an Internet technology, comprising the steps of:
determining whether or not issued direct mail was browsed (505); and
analyzing an effect of the issuance of the direct mail based on the determined result and a transaction history of commodities on a POS information managing system or an online shopping system.

14. A sales promotion controlling method based on direct mail issued using online communicating means based on an Internet technology, comprising the steps of:
determining whether or not issued direct mail was browsed (505); and
controlling an issuance state of the direct mail based on the determined result.

15. The method as set forth in any of claims 11-14, further comprising the steps of:
issuing the direct mail as electronic mail with a direct mail open acknowledge message request option; and
determining whether or not the issued direct mail was browsed based on the direct mail open acknowledge message returned from the recipient of the electronic mail.

16. The method as set forth in any of claims 11-15, further comprising the steps of:
issuing the direct mail using a sales promotion homepage; and
determining whether or not the issued direct mail was browsed based on a returned result of a form provided on the sales promotion homepage returned by a customer who browsed the sales promotion homepage.

17. A record medium from which a computer reads a program, the program causing the computer to perform the steps of:
determining whether or not direct mail issued using online communicating means based on an Internet technology was browsed; and
controlling sales promotion activities for commodities advertised by the direct mail based on the determined result.

18. A record medium from which a computer reads a program, the program causing the computer to perform the steps of:
determining whether or not direct mail issued using online communicating means based on an Internet technology was browsed; and
controlling an assignment state of a benefit to a commodity purchasing activity by a recipient of the direct mail on a POS information managing system or an online shopping system based on the determined result.

19. A record medium from which a computer reads a program, the program causing the computer to perform the steps of:
determining whether or not direct mail issued using online communicating means based on an Internet technology was browsed; and
analyzing an effect of the issuance of the direct mail based on the determined result and a transaction history of commodities on a POS information managing system or an online shopping system.

20. A record medium from which a computer reads a program, the program causing the computer to perform the steps of:
determining whether or not direct mail issued using online communicating means based on an Internet technology was browsed; and
controlling an issuance state of the direct mail based on the determined result.
